# EUROPÄISCHE PATENTANMELDUNG

(11) **EP 4 289 530 A1**
(43) Veröffentlichungstag der Anmeldung: **13.12.2023**
(21) Anmeldenummer: 23174792.4
(22) Anmeldetag: 23.05.2023
(51) Int. Cl.: B22F 7/00, B22F 5/10, B22F 10/10, B28B 1/00, B33Y 10/00, B33Y 80/00, C04B 35/04, C04B 35/10, C04B 35/48, C22C 33/02, H01F 1/147, H01F 1/28, H01F 27/255, H02K 15/02, H02K 1/02

(54) **VERFAHREN ZUR HERSTELLUNG VON ELEMENTEN FÜR ELEKTRISCHE ARBEITSMASCHINEN, DIE MIT ÜBEREINANDER ANGEORDNETEN SCHICHTEN AUS EISEN ODER EINER EISENLEGIERUNG MIT WEICHMAGNETISCHEN EIGENSCHAFTEN GEBILDET SIND SOWIE EIN DAMIT HERGESTELLTES ELEMENT**

(30) Priorität: 07.06.2022 DE 102022205759
(71) Anmelder: Fraunhofer-Gesellschaft zur Förderung der angewandten Forschung e.V., 80686 München (DE)
(72) Erfinder: Lindemann-Geipel, Inge, 01277 Dresden (DE); Reuter, Kay, 01277 Dresden (DE); Studnitzky, Thomas, 01277 Dresden (DE); Riecker, Sebastian, 01277 Dresden (DE)
(74) Vertreter: Pfenning, Meinig & Partner mbB

(57) **Zusammenfassung**

Bei dem Verfahren werden übereinander angeordnete Schichten aus Eisen oder einer Eisenlegierung und dazwischen jeweils eine elektrisch isolierende Schicht angeordnet. Die Schichten werden mit Pulver und einem organischen Binder gebildet und durch Siebdruck ausgebildet. Die isolierenden Schichten werden mit MgO, Al₂O₃ oder ZrO₂ oder einem Hydroxid oder Acetat, das ausgewählt ist aus Magnesiumhydroxid, Aluminiumhydroxid, Zirkoniumhydroxid, Magnesiumacetat, Aluminiumacetat und Zirkoniumacetat oder ein Carbonat, das ausgewählt ist aus Magnesiumcarbonat und Zirkoniumcarbonat gebildet. Im Anschluss an den Siebdruck wird der erhaltene Schichtstapel einer thermischen Behandlung unterzogen, bei der in einer ersten Stufe im Temperaturbereich zwischen 100° C und 800° C die Entbinderung erfolgt und eine chemische Reaktion durchgeführt, bei der das jeweilige Hydroxid, Acetat und/oder Carbonat in das jeweilige Metalloxid umgewandelt wird. Dann wird eine zweite Stufe der thermischen Behandlung durchgeführt, bei der in einer reduzierenden Atmosphäre bei einer Temperatur im Bereich 1200° C bis 1350° C eine Sinterung des Eisens oder der jeweiligen Eisenlegierung zur Ausbildung von Schichten mit weichmagnetischen Eigenschaften durchgeführt wird und poröse elektrisch isolierende Schichten erhalten werden.

## Beschreibung

Die Erfindung betrifft ein Verfahren zur Herstellung von Elementen für elektrische Arbeitsmaschinen, die mit übereinander angeordneten Schichten aus Eisen oder einer Eisenlegierung mit weichmagnetischen Eigenschaften gebildet sind und ein so hergestelltes Element. Bei den so hergestellten Elementen kann es sich um Elemente handeln, die in Elektromotoren, Generatoren oder Transformatoren, insbesondere als Rotoren oder Statoren eingesetzt werden können. Dabei werden üblicherweise übereinander gestapelte Elektrobleche, die elektrisch voneinander isoliert sind, eingesetzt.

Konventionelle Elektrobleche (z.B. aus Fe-3Si) werden gewalzt und anschließend mit Backlack beschichtet. Dieser erhöht die Stanzbarkeit und gewährleistet die Isolierung der einzelnen Blechlagen in einem Stapel gegeneinander zur Reduzierung der Wirbelstromverluste im Einsatz. Die benötigte Geometrie der einzelnen Bleche wird dabei durch Stanzen des gewalzten Blechs erhalten. Dabei tritt ein Verschleiß der Werkzeuge auf. Durch den Walz- und Stanzprozess ist die minimale Blechdicke auf etwa 200 µm limitiert und der Legierungsgehalt auf maximal 3,5 Masse-% Si.

Eine Reduzierung der Wirbelstromverluste ist aber nötig, um die Effizienz von elektrischen Arbeitsmaschinen zu erhöhen. Dies ist insbesondere durch eine Erhöhung des Legierungsgehaltes an in der jeweiligen Eisenlegierung enthaltenem Silicium auf > 3,5 Masse-% und eine Verringerung der Blechdicke auf d < 200 µm erreichbar. Die Fertigung solcher Blechstapel auf klassischem Wege ist bisher jedoch nicht möglich, da die entsprechenden Eisenlegierungen eine hohe Festigkeit und Sprödheit aufweisen. Allein oder zusätzlich zu Si kann auch Al, Cr, Co und/oder P Bestandteil der Eisenlegierung sein. Dabei kommt es insbesondere darauf an, inwiefern Legierungselemente magnetische Eigenschaften verbessern, die sich nicht nur auf den spezifischen Widerstand beziehen lassen.

Bisher werden die einzelnen Bleche mit konventioneller Backlackbeschichtung beschichtet, dann in einem separaten Verfahrensschritt pakettiert und bei erhöhter Temperatur von etwa 200° C- 250° C zu einem Blechpaket verklebt.

Die additive Fertigung von Elektroblechen ermöglicht die Herstellung dünner Bleche mit hohem Legierungsgehalt an Si, Al, Cr oder P. Da die Weiterverarbeitung sehr dünner Einzelbleche sehr aufwändig ist, wäre eine direkte Fertigung des Blechpakets erstrebenswert und ressourcenschonend.

Zur Isolation der Blechlagen gegeneinander ist aufgrund der limitierten Einsatztemperatur (~250°C) der konventionelle Backlack eigentlich nicht günstig.

Die additive Fertigung von Elementen einer elektrischen Arbeitsmaschine ist z.B. in DE 11 2012 002 953 A5 beschrieben.

Dünne Bleche mit hohen Legierungsgehalten (> 3,5 Masse-% Si) können additiv insbesondere durch 3D-Siebdruck gefertigt werden. Die Endgeometrie wird direkt während des Druckvorgangs ausgebildet, so dass viele unterschiedliche Einzelprozessschritte eingespart werden können. Der Druck des kompletten Blechpakets kann viele weitere Verfahrensschritte einsparen. Eine keramische Isolationsschicht kann ebenso verdruckt werden (hoher spez. elektrischer Widerstand, hohe Wärmebeständigkeit) und hinsichtlich der Wärmebehandlungsparameter der Eisenlegierung angeglichen werden. Dabei stellen die jeweiligen Temperaturunterschiede von Keramik- und Eisenwerkstoffen ein Problem dar.

Es ist daher Aufgabe der Erfindung, Möglichkeiten anzugeben, mit denen Elemente für elektrische Arbeitsmaschinen, die mit alternierend wechselnd angeordneten Schichten eines weichmagnetischen und eines elektrisch isolierenden Werkstoffs gebildet sind, einfach und effektiv hergestellt werden und dabei diese Elemente reduzierte elektrische Wirbelstromverluste erreichen.

Erfindungsgemäß wird diese Aufgabe mit einem Verfahren, das die Merkmale des Anspruchs 1 aufweist, gelöst. Anspruch 10 betrifft ein damit hergestelltes Element. Vorteilhafte Ausgestaltungen und Weiterbildungen der Erfindung können mit in abhängigen Ansprüchen bezeichneten Merkmalen realisiert werden.

Bei dem Verfahren zur Herstellung von Elementen für elektrische Arbeitsmaschinen, die mit übereinander angeordneten Schichten aus Eisen oder einer Eisenlegierung mit weichmagnetischen Eigenschaften gebildet sind und zwischen den Schichten, die mit Eisen oder der Eisenlegierung gebildet sind, jeweils eine elektrisch isolierende Oxidschicht angeordnet ist, werden die Schichten aus Eisen oder der Eisenlegierung jeweils mit einer Suspension, die mit einem Pulver aus Eisen oder der Eisenlegierung und einem organischen Binder gebildet ist, durch Siebdruck in einer vorgegebenen Geometrie mit einer vorgegebenen ersten Schichtdicke ausgebildet.

Die zwischen den mittels Siebdruck ausgebildeten Schichten aus Eisen oder der Eisenlegierung elektrisch isolierende Schichten, die mit einem Pulver und einem organischen Binder gebildet ist, werden durch Siebdruck in der vorgegebenen Geometrie mit einer vorgegebenen zweiten Schichtdicke ausgebildet, wobei als Pulver MgO, Al₂O₃, ZrO₂ oder ein Hydroxid oder Acetat, das ausgewählt ist aus Magnesiumhydroxid (Mg(OH)₂), Aluminiumhydroxid (Al(OH)₃), Zirkoniumhydroxid (Zr(OH)₄), Magnesiumacetat (MgAc), Aluminiumacetat (AlAc) und Zirkoniumacetat (ZrAc) oder ein Carbonat, das ausgewählt ist aus Magnesiumcarbonat und Zirkoniumcarbonat eingesetzt wird.

Dabei kann jede einzelne Schicht durch mindestens einmaliges Siebdrucken, aber falls eine gewünschte Zielschichtdicke einmalig nicht erreicht werden kann, durch mehrmaliges übereinander Drucken, ausgebildet werden, bis die jeweilige erste oder zweite Schichtdicke erreicht worden ist.

Im Anschluss an den Siebdruck wird der erhaltene Schichtstapel einer thermischen Behandlung unterzogen.

Dabei wird in einer ersten Stufe im Temperaturbereich zwischen 100° C und 800° C eine chemische Reaktion durchgeführt, bei der das jeweilige Hydroxid, Acetat und/oder Carbonat in das jeweilige Metalloxid umgewandelt und poelektrisch isolierende Schichten aus Magnesium-, Aluminium- und/oder Zirkoniumoxid erhalten werden. Werden MgO, Al₂O₃ oder ZrO₂ als Ausgangsmaterial in der Suspension eingesetzt, erfolgt keine chemische Umwandlung. Die elektrisch isolierenden Schichten werden dann gleich mit dem jeweiligen Oxid gebildet.

In der ersten Stufe werden organische Komponenten aus den Schichtmaterialien entfernt (Entbinderung).

Bei der Erfindung ist der Einsatz eines Hydroxids, Acetats oder Carbonats gegenüber dem Einsatz eines Oxids vorteilhaft, da die Sinterfähigkeit der keramischen Partikel durch die kleine Partikelgröße nach der chemischen Umwandlung verbessert werden kann. Auf diese Weise kann während der Versinterung der Eisenlegierung in der zweiten Stufe eine teilweise versinterte poröse Oxidkeramik als elektrische Isolationsschicht vorteilhaft erhalten werden.

Im Anschluss an die erste Stufe wird eine zweite Stufe der thermischen Behandlung durchgeführt, bei der in einer reduzierenden Atmosphäre bei einer Temperatur im Bereich 1200° C bis 1350° C eine Sinterung des Eisens oder der jeweiligen Eisenlegierung zur Ausbildung von Schichten mit entsprechenden weichmagnetischen Eigenschaften durchgeführt wird.

Die elektrisch isolierenden oxidkeramischen Schichten zwischen den Metallschichten können so bei Temperaturen unterhalb der Schmelztemperatur von Eisen oder der jeweiligen Eisenlegierung erhalten werden, so dass es dadurch keine Probleme gibt, obwohl übliche Sintertemperaturen keramischer und insbesondere oxidkeramischer Werkstoffe deutlich oberhalb der Schmelztemperatur von Eisen oder der eingesetzten Eisenlegierungen liegen.

Aufgrund der für Keramiken vergleichsweise niedrigen Sintertemperatur wird vorteilhaft keine vollständig geschlossene oxidkeramische Schicht ausgebildet. Die so erhaltenen elektrisch isolierenden Schichten weisen vorteilhaft ein gewisses Maß an Porosität auf, worauf noch näher eingegangen werden soll.

Vorteilhaft kann ein Pulver einer Eisenlegierung eingesetzt werden, die mindestens 3,5 Masse-% Si, Si enthält. Es können aber auch Legierungen von Eisen mit Nickel und/oder Kobalt ggf. ohne Silicium oder eine FeSiAI-Legierung, insbesondere eine Fe-9.5-Si-5.5Al-Legierung eingesetzt werden. Bevorzugt ist auch eine Fe-6.5Si-Legierung. Es kann auch ein Pulver einer Eisenlegierung eingesetzt werden, in der neben Eisen auch Al, Cr, Co und/oder P als Legierungselement(e) enthalten sind.

Die Schichten, die mit der Eisenlegierung gebildet sind, sollten mit einer ersten Schichtdicke unter Berücksichtigung des jeweiligen Schwindungsmaßes bei der Sinterung ausgebildet werden, bei der die gesinterten Schichten, die aus der Eisenlegierung gebildet sind, eine maximale Schichtdicke von 350 µm, bevorzugt maximal 180 µm, besonders bevorzugt maximal 150 µm aufweisen. Gesinterte Schichten die aus Eisen, ohne Legierungselemente gebildet sind, sollte eine maximale Schichtdicke von 150 µm, bevorzugt maximal 100 µm eingehalten werden.

Es kann Eisenpulver oder ein Pulver der jeweiligen Eisenlegierung mit einer mittleren Partikelgröße dso im Bereich 1 µm bis 20 µm eingesetzt werden. Ein Pulver des jeweiligen Oxids, Hydroxids, Acetats und/oder Carbonats sollte mit einer mittleren Partikelgröße dso im Bereich 0,2 µm bis 5 µm eingesetzt werden. Entsprechende Partikelgrößen eignen sich auch bei direktem Einsatz von MgO, Al₂O₃ oder ZrO₂, wobei dann kleine Partikelgrößen < 1 µm bevorzugt sind.

Die elektrisch isolierenden Schichten können mit einer Porosität im Bereich 20 % bis 60 % ausgebildet werden. Dabei stellt die in den Poren vorhandene Luft beim Betrieb einer elektrischen Arbeitsmaschine eine weitere elektrische Isolierungsmöglichkeit dar.

Die Suspensionen können mit einem Lösungsmittel, insbesondere Wasser oder einem organischen Lösungsmittel und dem organischen Binder, der ausgewählt ist aus Tylosen, Methylcellulose, Polyvenylalkohol, Polyvinylpyrrolidon und Polyethylenglycol gebildet sein, um als Suspension zum Siebdrucken eingesetzt werden zu können. Dabei kann ein organischer Binder mit einem Anteil von 0,5 Masse-% - 1 Masse-% in Bezug zum jeweils enthaltenen Pulver eingesetzt werden. Der Anteil an Lösungsmittel kann vernachlässigt werden, da das Lösungsmittel während der thermischen Behandlung verdampft.

In den Suspensionen können weitere Additive zur Einstellung der Rheologie enthalten sein. Dies können beispielsweise an sich bekannte Verdicker, Dispergiermittel, Netzmittel (Tenside) oder auch Weichmacher sein. Sie dienen im Wesentlichen dazu eine zum Siebdrucken geeignete Konsistenz und Verarbeitbarkeit zu erreichen. Die Additive können bei der thermischen Behandlung thermisch zersetzt werden.

Wird eine Suspension oder Paste zum Siebdrucken eingesetzt in der organische Komponenten enthalten sind, kann man beispielsweise MgO einsetzen, wohingegen bei der Nutzung von Mg(HO)₂ Pasten oder Suspensionen auf wässriger Basis erforderlich sind.

Während der Durchführung der ersten thermischen Behandlung kann diese in zwei Stufen durchgeführt werden. In einer ersten Stufe wird eine Entbinderung durchgeführt, bei der die organischen Komponenten entfernt werden. Das Vormaterial zersetzt sich im Temperaturbereich von 100° C - 300° C, so dass sich das Ausgangsmaterial Hydroxid, Acetat und/oder Carbonat chemisch zersetzt und es erfolgt eine chemische Reaktion bei der das/die jeweilige(n) Oxid(e) mit feiner Partikelgrößenverteilung von < 1 µm gebildet wird. Eine kleine Aufheizrate von maximal 4 K/min dient dazu, dass ein ausreichend großer Anteil an Hydroxid, Acetat und/oder Carbonat während der ersten Stufe chemisch zum entsprechenden Oxid umgesetzt werden kann.

Werden MgO, Al₂O₃ oder ZrO₂ direkt eingesetzt, erfolgt in der ersten Stufe nur die Entfernung organischer Komponenten.

Die zweite Stufe der thermischen Behandlung sollte bis zur vollständigen Sinterung des Eisens oder der jeweiligen Eisenlegierung durchgeführt werden. Dadurch kann eine ausreichende Festigkeit der jeweiligen Schicht und des mit sämtlichen Schichten gebildeten Stapels gesichert werden, der _vorteilhaft zu einem Bauteil mit guten magnetischen Eigenschaften führt.

Die elektrisch isolierenden Schichten sollten mit einer zweiten Schichtdicke ausgebildet werden, bei der zwischen den gesinterten Schichten, die mit Eisen oder mit der jeweiligen Eisenlegierung gebildet sind, ein Mindestabstand von 0,5 µm eingehalten wird. Dadurch kann ein elektrischer Kurzschluss bzw. eine Weiterleitung ggf. auftretender elektrischer Wirbelströme von einer Schicht zu einer daneben angeordneten Schicht, die beide aus Eisen oder der Eisenlegierung bestehen, verhindert werden. Die elektrisch isolierenden Schichten müssen keine vollständig geschlossene Schicht bilden. Vielmehr können auch Lücken oder Durchbrechungen in einer elektrisch isolierenden Schicht vorhanden sein, in denen Luft enthalten ist. Es muss nur gesichert sein, dass keine direkte elektrisch leitende Verbindung zwischen zwei nebeneinander angeordneten Schichten, die aus Eisen oder der Eisenlegierung gebildet sind, möglich ist.

Dadurch, dass die Schichten, die mit Eisen oder der Eisenlegierung und die elektrisch isolierenden Schichten aus dem/den jeweiligen Metalloxid(en) unmittelbar übereinander durch Siebdrucken ausgebildet und anschließend mit der thermischen Behandlung weiter verarbeitet werden, werden Elemente hergestellt, die aus alternierend angeordneten Schichten aus Eisen oder der jeweiligen gesinterten Eisenlegierung zwischen denen elektrisch isolierende Schichten aus Magnesiumoxid, Aluminiumoxid und/oder Zirkoniumoxid angeordnet und jeweils nebeneinander angeordnete Schichten stoff- und formschlüssig miteinander verbunden sind, gebildet sind.

So können in Summe mindestens drei aber auch mehr Schichten durch Siebdrucken übereinander ausgebildet werden, die ein Element bilden.

Die ersten und zweiten Schichten können jeweils durch einmaliges Siebdrucken aber auch jeweils eine Schicht durch mehrmaliges Siebdrucken ausgebildet werden, um die jeweils gewünschte Schichtdicke nach Durchführung des Verfahrens zu erreichen.

Die als Vormaterialien eingesetzten Hydroxide, Acetate oder Carbonate bilden beim Entbindern nanometergroße Oxidkeramikpartikel aus, so dass es beim Sintern der Eisenlegierung zur Bildung einer porösen Keramikschicht als elektrischer Isolationsschicht zwischen den einzelnen Schichten aus der Eisenlegierung kommt. Werden die für die Ausbildung der elektrisch isolierenden Schichten genutzten Oxide direkt in einer Suspension, ohne vorherige chemische Umwandlung in der ersten Stufe, gedruckt, sollten Partikelgrößen kleiner 1 µm für die Herstellung der Suspension genutzt werden, um diesen Effekt erreichen zu können.

Die Luft innerhalb der porösen Oxidkeramik trägt als sehr guter Isolator zusätzlich zur elektrischen Isolation bei. Die Delaminationsneigung, der übereinander angeordneten und stoffschlüssig miteinander verbundenen zwei Schichtarten ist durch die Porosität der oxidkeramischen elektrischen Isolationsschichten deutlich gesenkt. Es können dadurch die unterschiedlichen thermischen Ausdehnungskoeffizienten der Oxidkeramik und des Eisens oder der Eisenlegierung kompensiert werden.

Mit der Erfindung können bisher üblicherweise durchgeführte viele aufwändige Einzelprozesse entfallen und die Wahl der Eisenlegierung und der Schichtdicke, der damit ausgebildeten Schichten sind nahezu frei wählbar. Insbesondere können Legierungen eingesetzt werden, die anderweitig nicht bzw. nur sehr aufwändig verarbeitet werden können. Es können sehr kleine Dicken der mit Eisen oder der Eisenlegierung gebildeten Schichten realisiert werden, um sehr kleine Ummagnetisierungsverluste zu ermöglichen.

Nachfolgend soll die Erfindung beispielhaft näher erläutert werden.

Dabei zeigt:

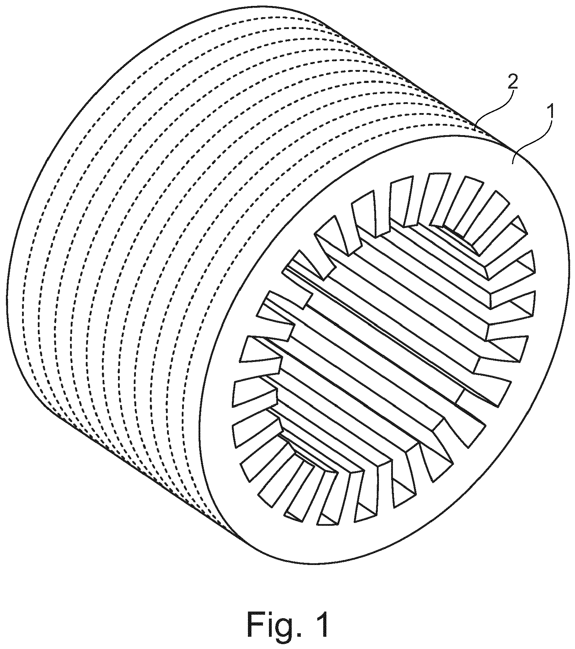

Figur 1 eine schematische Darstellung eines Beispiels eines erfindungsgemäß hergestellten Elements (Stator).

Mit Figur 1 soll verdeutlicht werden wie alternierend durch Siebdruck ausgebildete Schichten 1, die jeweils alternierend aus Eisen oder einer Eisenlegierung und elektrisch isolierenden Schichten 2 aus einer Oxidkeramik bestehen und die nach einer in zwei Stufen durchgeführten thermischen Behandlung, bei der zuerst die Schichten 2 aus der jeweiligen Oxidkeramik nach dem Siebdrucken durch chemische Umwandlung aus einem entsprechenden Hydroxid, Acetat und/oder Carbonat erhalten und bei der Entbinderung organische Komponenten ausgetrieben worden sind, und in einer zweiten Stufe Eisen oder die Eisenlegierung in der in den entsprechenden Schichten 1 gesintert worden ist.

### Ausführungsbeispiel 1

Es wurde Fe-3.5Si Pulver mit 55 Masse-% Pulverbeladung mit einem wasserlöslichen organischen Binder (PVA), 3% Entschäumer, Netzmittel, Verdicker und Dispergator zu einer Suspension oder druckbaren Paste verarbeitet. Die Suspension oder druckbare Paste wird zum Drucken erster Schichten 1 genutzt, wobei die Schichtdicke der ersten Schichten bei jeweils 180 µm lag. Das eingesetzte Pulver hatte eine mittlere Partikelgröße dso von 15 µm.

Ein Mg(OH)₂ Pulver wird als Vormaterial für die Oxidkeramik zum Drucken zweiter Schichten 2 eingesetzt. Die dafür eingesetzte Suspension oder druckbare Paste enthielt dabei 50 Masse-% des pulverförmigen Magnesiumhydroxids. Die Suspension oder druckbare Paste wurde auch hier mit üblicherweise beim Siebdrucken eingesetzten Komponenten, wie wasserlöslichem organischem Binder (PVA), 3 Masse-% Entschäumer, Netzmittel, Verdicker und Dispergator hergestellt. Zweite Schichten wurden mit einer sehr dünnen Schichtdicke von etwa 10 µm gedruckt. Die ersten und zweiten Schichten 1 und 2 wurden abwechselnd übereinander gedruckt, um ein elektromagnetisches Element mit der gewünschten Dimensionierung und Geometrie zu erhalten. Dabei ist eine Schwindung des Volumens von etwa 14 % nach der Sinterung zu berücksichtigen.

In der anschließenden thermischen Behandlung wird das gedruckte Element entbindert, wobei bei einer ersten thermischen Behandlung in einem Temperaturbereich von 100°C bis 800°C mit einer Aufheizrate von 4 K/min und einer Haltezeit von jeweils 0,5h entbindert und die chemischen Reaktionen bei der des Magnesiumhydroxid in Magnesiumoxid umgewandelt wird, durchgeführt wird. In einer zweiten Stufe der thermischen Behandlung wird bei 1300°C und einer Haltezeit von 1 h eine Sinterung in einer Formiergasatmosphäre durchgeführt, wobei dichte Fe-3.5Si Blechlagen als erste Schichten 1 mit einer Dicke von 150 µm und poröse MgO-Zwischenschichten mit 8 µm Schichtdicke als zweite Schichten 2 erhalten werden.

### Ausführungsbeispiel 2

Es wurde Fe-6.5Si Pulver mit 55 Masse-% Pulverbeladung mit einem wasserlöslichem organischem Binder (PVA), 4 Masse-% Entschäumer, Netzmittel, Verdicker und Dispergator zu einer Suspension oder druckbaren Paste verarbeitet. Die Suspension oder druckbare Paste wird zum Drucken erster Schichten 1 genutzt, wobei die Schichtdicke der ersten Schichten bei jeweils 400 µm lag. Das eingesetzte Pulver hatte eine mittlere Partikelgröße dso von 17 µm. Ein nanopartikuläres ZrO₂ Pulver wird zum Drucken der zweiten Schichten 2 eingesetzt. Die dafür eingesetzte Suspension oder druckbare Paste enthielt dabei 45 Masse-% des pulverförmigen ZrO₂ mit einer mittleren Partikelgröße dso von 200 nm. Die Suspension oder druckbare Paste wurde auch hier mit üblicherweise beim Siebdrucken eingesetzten Komponenten, wie wasserlöslichem organischem Binder (PVA), 3 Masse-% Entschäumer, Netzmittel, Verdicker und Dispergator hergestellt. Zweite Schichten wurden mit einer sehr dünnen Schichtdicke von etwa 10 µm gedruckt. Die ersten und zweiten Schichten 1 und 2 wurden abwechselnd übereinander gedruckt, um ein elektromagnetisches Element mit der gewünschten Dimensionierung und Geometrie zu erhalten. Dabei ist eine Schwindung des Volumens von etwa 15 Vol.-% nach der Sinterung zu berücksichtigen.

In der anschließenden thermischen Behandlung wird das gedruckte Element entbindert, wobei bei einer ersten thermischen Behandlung in einem Temperaturbereich von 100°C bis 800°C mit einer Aufheizrate von 4 K/min und einer Haltezeit von 0,5h entbindert wird. In einer zweiten Stufe der thermischen Behandlung wird bei 1250°C und einer Haltezeit von 1 h eine Sinterung in einer Formiergasatmosphäre durchgeführt, wobei dichte Fe-6.5Si Blechlagen als erste Schichten 1 mit einer Dicke von 350 µm-und poröse ZrO₂-Zwischenschichten mit 10 µm Schichtdicke als zweite Schichten 2 erhalten werden.

## Patentansprüche

1. Verfahren zur Herstellung von Elementen für elektrische Arbeitsmaschinen, die mit übereinander angeordneten Schichten (1) aus Eisen oder einer Eisenlegierung mit weichmagnetischen Eigenschaften gebildet sind und zwischen den Schichten (2), die mit Eisen oder mit der Eisenlegierung gebildet sind, jeweils eine elektrisch isolierende Schicht (2) angeordnet ist, bei dem
die Schichten (1) aus Eisen oder der Eisenlegierung jeweils mit einer Suspension, die mit Eisen oder mit einem Pulver der Eisenlegierung und einem organischen Binder gebildet ist, durch Siebdruck in einer vorgegebenen Geometrie mit einer vorgegebenen ersten Schichtdicke ausgebildet werden und
die zwischen den mittels Siebdruck ausgebildeten Schichten (1) aus Eisen oder der Eisenlegierung elektrisch isolierenden Schichten (2), die mit einem Pulver und einem organischen Binder gebildet ist, durch Siebdruck in der vorgegebenen Geometrie mit einer vorgegebenen zweiten Schichtdicke ausgebildet werden, wobei als Pulver MgO, Al₂O₃ oder ZrO₂ oder ein Hydroxid oder Acetat, das ausgewählt ist aus Magnesiumhydroxid, Aluminiumhydroxid, Zirkoniumhydroxid, Magnesiumacetat, Aluminiumacetat und Zirkoniumacetat oder ein Carbonat, das ausgewählt ist aus Magnesiumcarbonat und Zirkoniumcarbonat eingesetzt wird und
im Anschluss an den Siebdruck der erhaltene Schichtstapel einer thermischen Behandlung unterzogen wird, bei der
in einer ersten Stufe im Temperaturbereich zwischen 100° C und 800° C die Entbinderung erfolgt und eine chemische Reaktion durchgeführt wird, bei der das jeweilige Hydroxid, Acetat und/oder Carbonat in das jeweilige Metalloxid mit feiner Partikelgrößenverteilung umgewandelt wird, wenn mindestens eine dieser chemischen Verbindungen in der jeweiligen Suspension enthalten war, und im Anschluss an die erste Stufe eine zweite Stufe der thermischen Behandlung durchgeführt wird, bei der
in einer reduzierenden Atmosphäre bei einer Temperatur im Bereich 1200° C bis 1350° C eine Sinterung des Eisens oder der jeweiligen Eisenlegierung zur Ausbildung von Schichten (1) mit entsprechenden weichmagnetischen Eigenschaften durchgeführt wird und poröse elektrisch isolierende Schichten (2) erhalten werden.

2. Verfahren nach Anspruch 1, **dadurch gekennzeichnet, dass** ein Pulver einer Eisenlegierung eingesetzt wird, die mindestens 3,5 Masse-% Si, bevorzugt mindestens 6 Masse-% Si enthält; wobei insbesondere eine Fe-6.5Si- oder Fe-9.5Si-5.5Al-Legierung eingesetzt wird.

3. Verfahren nach Anspruch 1 oder 2, **dadurch gekennzeichnet, dass** ein Pulver einer Eisenlegierung eingesetzt wird, in der neben Eisen auch Al, Cr, Co und/oder P als Legierungselement(e) enthalten sind.

4. Verfahren nach einem der vorhergehenden Ansprüche, **dadurch gekennzeichnet, dass** die Schichten (1), die mit der Eisenlegierung gebildet sind, mit einer Schichtdicke unter Berücksichtigung des jeweiligen Schwindungsmaßes bei der Sinterung ausgebildet werden, bei der die gesinterten Schichten, die aus der Eisenlegierung gebildet sind, eine maximale Schichtdicke von 400 µm, bevorzugt maximal 180 µm, besonders bevorzugt maximal 150 µm aufweisen oder
die Schichten (1), die aus Eisen gebildet sind, mit einer Schichtdicke unter Berücksichtigung des jeweiligen Schwindungsmaßes bei der Sinterung ausgebildet werden, bei der die gesinterten Schichten eine maximale Schichtdicke von 150 µm, bevorzugt maximal 100 µm aufweisen.

5. Verfahren nach einem der vorhergehenden Ansprüche, **dadurch gekennzeichnet, dass** ein Eisenpulver oder ein Pulver der jeweiligen Eisenlegierung mit einer mittleren Partikelgröße d₅₀ im Bereich 1 µm bis 20 µm und/oder ein Pulver des jeweiligen Hydroxids, Acetats und/oder Carbonats mit einer mittleren Partikelgröße d₅₀ im Bereich 0,5 µm bis 5 µm eingesetzt wird.

6. Verfahren nach einem der vorhergehenden Ansprüche, **dadurch gekennzeichnet, dass** die elektrisch isolierenden Schichten (2) mit einer Porosität im Bereich 20 % bis 60 % ausgebildet werden.

7. Verfahren nach einem der vorhergehenden Ansprüche, **dadurch gekennzeichnet, dass** die Suspensionen mit einem Lösungsmittel, insbesondere Wasser und dem organischen Binder, der ausgewählt ist aus Tylosen, Methylcellulose, Polyvenylalkohol, Polyvinylpyrrolidon und Polyethylenglycol eingesetzt wird.

8. Verfahren nach einem der vorhergehenden Ansprüche, **dadurch gekennzeichnet, dass** die zweite Stufe der thermischen Behandlung bis zur vollständigen Sinterung des Eisens oder der jeweiligen Eisenlegierung durchgeführt wird.

9. Verfahren nach einem der vorhergehenden Ansprüche, **dadurch gekennzeichnet, dass** die elektrisch isolierenden Schichten (2) mit einer Schichtdicke ausgebildet werden, bei der zwischen den gesinterten Schichten (1), die mit Eisen oder der jeweiligen Eisenlegierung gebildet sind, ein Mindestabstand von 0,5 µm -20 µm eingehalten wird.

10. Element für elektrische Arbeitsmaschinen hergestellt mit einem Verfahren nach einem der vorhergehenden Ansprüche, **dadurch gekennzeichnet, dass** es aus alternierend angeordneten Schichten (1) aus gesintertem Eisen oder einer gesinterten Eisenlegierung zwischen denen elektrisch isolierenden Schichten (2) aus Magnesiumoxid, Aluminiumoxid und/oder Zirkonoxid angeordnet und jeweils nebeneinander angeordnete Schichten (1 und 2) stoff- und formschlüssig miteinander verbunden sind, gebildet ist.
